# EUROPÄISCHE PATENTSCHRIFT

(11) **EP 0 555 658 B1**
(45) Veröffentlichungstag und Bekanntmachung des Hinweises auf die Patenterteilung: **15.11.1995**
(21) Anmeldenummer: 93100651.4
(22) Anmeldetag: 18.01.1993
(51) Int. Cl.: F24F 5/00

(54) **Klimatisierungsanlage für ein Gebäude**
Air conditioning system for buildings
Installation de climatisation pour un bâtiment

(30) Priorität: 17.01.1992 DE 4201082
(43) Veröffentlichungstag der Anmeldung: 18.08.1993
(73) Patentinhaber: Götz GmbH Metall- und Anlagenbau, D-70736 Fellbach (DE)
(72) Erfinder: Püttmer, Marcus, W-7000 Stuttgart 50 (DE)
(74) Vertreter: Wolf, Eckhard, Dr.-Ing.

(56) Entgegenhaltungen:
- EP-A- 0 115 014
- DE-A- 3 607 719
- DE-A- 3 940 530
- DE-A- 4 042 387
- DE-A- 4 103 010
- DE-B- 4 022 441

## Beschreibung

Die Erfindung betrifft eine Anlage zur Klimatisierung eines Gebäudes mit einer aus einer lichtdurchlässigen Außenschale und einer einen Gebäudeinnenraum begrenzenden lichtdurchlässigen Innenschale bestehenden, im Fassadenzwischenraum zwischen Außen- und Innenschale eine Mehrzahl von mit Lamellen versehenen Jalousien aufweisenden, von der Gebäudeaußenseite her mit Zuluft beaufschlagbaren, sich gegebenenfalls über mehrere Stockwerke des Gebäudes erstreckenden Doppelfassade.

Es ist eine Anlage dieser Art bekannt (Verwaltungsgebäude in Dillenburg, Baujahr 1986), bei welcher die im Fassadenfußpunkt über ein Insektengitter einströmende Luft bei der Durchströmung des Fassadenzwischenraums einen Teil der Transmissions- und Lüftungswärmeverluste aufnimmt und über ein zweischaliges Dach einer Wärmepumpe auf dem Dach zuführt. Die über die Wärmepumpe gewonnene Wärme wird zur Raumheizung im Gebäude verwendet. Zu Untersuchungszwecken wurde die Südwest-Fassade des Gebäudes in drei Fassadensegmente aufgeteilt, von denen das eine ohne Sonnenschutz und die beiden anderen mit einer Sonnenstrahlen absorbierenden Absorptionsjalousie bzw. einer Sonnenlicht reflektierenden Reflexionsjalousie jeweils mit Vertikallamellen versehen wurden. Die Jalousien hatten dort also lediglich die Aufgabe, die physikalischen Effekte beim Wärmedurchgang durch das Fassadensystem wissenschaftlich zu erfassen und mit einem bauphysikalischen Berechnungsmodell zu vergleichen. Im übrigen werden die Jalousien bei dem bekannten Gebäude lediglich zu Abschattungszwecken bei starker Sonneneinstrahlung verwendet. Die von der Luft im Fassadenzwischenraum aufgenommene Wärme bildet eine Art Wärmehülle und wird über die Wärmepumpe und ein Wärmerückgewinnungssystem der Raumheizung zugeführt. Eine Nutzung dieser Luft für Belüftungszwecke ist dagegen nicht vorgesehen. Abgesehen davon, daß die Wärmerückgewinnung über Wärmepumpen einen erheblichen zusätzlichen Energiebedarf erfordert, läßt die bekannte Anlage hinsichtlich des erzielbaren Wirkungsgrads bei der Nutzung der über die Fassade eingestrahlten Sonnenenergie zu wünschen übrig.

Ausgehend hiervon liegt der Erfindung die Aufgabe zugrunde, eine Klimatisierungsanlage der eingangs angegebenen Art zu entwickeln, mit der sowohl Transmissions- und Lüftungswärmeverluste vermieden werden können, als auch die eingestrahlte Sonnenenergie für Raumklimatisierungszwecke optimal genutzt und geregelt werden kann.

Zur Lösung dieser Aufgabe werden die im Patentanspruch 1 angegebenen Merkmale vorgeschlagen. Weitere vorteilhafte Ausgestaltungen und Weiterbildungen ergeben sich aus den Unteransprüchen.

Die erfindungsgemäße Lösung geht von der Erkenntnis aus, daß den Jalousien eine wichtige Funktion bei der Absorption und Reflexion von Sonnenenergie und bei der Wärmeübertragung auf den Luftstrom in der Doppelfassade zukommt und daß damit eine relativ einfache Regelung der Wärmezu- und -abfuhr nach Maßgabe des aktuellen Wärmebedarfs im Gebäude möglich ist. Um dies zu erreichen, wird gemäß der Erfindung vorgeschlagen, daß die Jalousien in jedem Stockwerk in eine obere Reflexionsjalousie mit überwiegend lichtreflektierenden Querlamellen und eine an einer horizontalen Trennstelle an diese nach unten angrenzende untere Absorptionsjalousie mit überwiegend lichtabsorbierenden Querlamellen unterteilt sind, daß die sich paarweise über die Höhe oder eine Teilhöhe des jeweiligen Stockwerks erstreckenden Reflexions- und Absorptionsjalousien unter Verschiebung der Trennstelle höhenverstellbar sind, daß der Fassadenzwischenraum im stockwerksbezogen unteren Bereich des zwischen Außenschale und Jalousie befindlichen äußeren Teilraums mit Zuluft beaufschlagbar ist und daß der Gebäudeinnenraum über den zwischen Jalousie und Innenschale befindlichen inneren Teilraum des Fassadenzwischenraums mit der an den Querlamellen gegebenenfalls unter Wärmeaufnahme vorbeigeführten Zuluft belüftbar ist. Eine vorteilhafte Ausgestaltung der Erfindung sieht vor, daß im stockwerksbezogen oberen Bereich des zwischen Jalousie und Innenschale befindlichen inneren Teilraums ein verschließbarer Luftkollektor angeordnet ist, der mit einem Abluftkanal oder Abluftkamin verbunden sein kann.

Bei hohem Wärmebedarf im Gebäude wird die Trennstelle zwischen Reflexions- und Absorptionsjalousien höher eingestellt als bei niedrigem Wärmebedarf. Gleichzeitig können die Lamellen vor allem der Reflexionsjalousien nach dem jeweiligen Sonnenstand über Horizont durch Verstellung ihrer Winkelstellung angepaßt werden, wobei zusätzlich die über die Jalousie einzustellende Beleuchtungsstärke im Innenraum zu berücksichtigen ist. Die erfindungsgemäße Anordnung der Zulufteinlässe im äußeren Teilraum und der Luftkollektoren im inneren Teilraum des Fassadenzwischenraum führt zu einer den Wärmeaustausch begünstigenden Luftströmung an den Querlamellen vorbei und damit zu einer Verbesserung des erzielbaren Gesamtwirkungsgrads der Anlage. Eine weitere Verbesserung in dieser Hinsicht wird dadurch erzielt, daß die Innenschale und/oder die Außenschale aus vorzugsweise doppeltverglastem Isolierglas bestehen.

Um ein möglichst günstiges Regelverhalten bei der Reflexion und der Absorption von Sonnenenergie zu erhalten, bestehen die Lamellen der Reflexionsjalousien zweckmäßig aus poliertem Aluminium, während die Lamellen der Absorptionsjalousien lichtabsorbierend, vorzugsweise mattschwarz, eingefärbt sind. Um auch bei maximaler Lichtabsorption noch eine ausreichende Innenbeleuchtung über die Glasfassade zu erhalten, ist es von Vorteil, wenn die Trennstelle nicht über die gesamte Stockwerkshöhe verschoben werden kann. Als zweckmäßig hat es sich in diesem Zusammenhang erwiesen, wenn die Trennstelle von etwa der Unterkante des Stockwerks bis zu einer vorgegebenen Grenzhöhe von 1/2 bis 3/4 der Stockwerkshöhe nach oben verschiebbar ist. Bei niedrigen Außentemperaturen wird die Absorptionsjalousie mit ihrer Oberkante etwa auf Mannhöhe nach oben gefahren, während bei starkem Sonneneinfall die Absorptionsjalousie vollständig abgesenkt werden kann. Die Querlamellen der Absorptionsjalousie stehen üblicherweise unter einem festeingestellten Winkel, beispielsweise 25° gegenüber der Senkrechten. Um ein Maximum an Licht zu absorbieren, sollte der Anstellwinkel etwa senkrecht zur Sonneneinstrahlung ausgerichtet sein. Die Lamellen der Reflexionsjalousie können je nach Lichteinfall, Lichtbedarf und Wärmeisolationsbedarf in ihrer Stellung verstellt werden.

Eine bevorzugte Ausgestaltung der Erfindung sieht vor, daß die einander zugeordneten Reflexions- und Absorptionsjalousien in ihrer Höhenverstellung unabhängig voneinander über getrennte Seilzüge und Motoren betätigbar sind. Bei Bedarf ist es daher auch möglich, die Reflexions- und Absorptionsjalousien unter Bildung einer Lücke im Bereich der Trennstelle in entgegengesetzten Richtungen anzuheben und abzusenken.

Gemäß einer bevorzugten Ausgestaltung der Erfindung wird die Luft über im Bereich der Luftkollektoren angeordnete Sauggebläse in den Fassadenzwischenraum angesaugt und von dort aus zur Befriedigung eines zusätzlichen Wärmebedarfs über eine Zusatzheizstrecke geleitet. Die Luftkollektoren kommunizieren zweckmäßig über ein Transportrohr mit einem Wärmeaustauscher oder Wärmespeicher, der seinerseits mit dem Innenraum des betreffenden Gebäudestockwerks zum Zwecke des Wärmeübergangs in Verbindung steht. Im konkreten Fall läßt sich dies dadurch verwirklichen, daß die Luftkollektoren über ein als Fallrohr ausgebildetes Transportrohr in einen in einem Doppelfußboden angeordneten Luftverteiler und Wärmeaustauscher münden, wobei der Doppelfußboden als mit dem Innenraum des betreffenden Gebäudestockwerks in Verbindung stehender Wärmespeicher ausgebildet ist. Zumindest ein Teil der Luft kann sodann vorzugsweise über bodenseitig angeordnete Luftauslässe zum Zwecke der Raumklimatisierung in den Gebäudeinnenraum geleitet und aus diesem vorzugsweise deckenseitig in einen Abluftkanal nach dem Gebäudeäußeren abgeführt werden. Der Abluftkanal kann seinerseits durch einen Wärmeaustauscher zur Aufheizung von vorzugsweise dachseitig angesaugter Frischluft hindurchgeführt werden. Die auf diese Weise vorgeheizte Frischluft kann gegebenenfalls über eine zusätzliche Heizstrecke in ein vorzugsweise doppelfassadenloses Stockwerk zum Zwecke der Raumklimatisierung geleitet werden.

Gemäß einer weiteren vorteilhaften Ausgestaltung der Erfindung münden mehrere Luftkollektoren eines Stockwerks in ein gemeinsames Transport- und/oder Fallrohr. Dabei können die nach unterschiedlichen Himmelsrichtungen ausgerichteten Fassadenzwischenräume des Gebäudes voneinander getrennte und mit unabhängig voneinander verschließbaren Lufteintritts- und Luftaustrittsöffnungen versehene Lufträume bilden. Letzteres kann dazu benutzt werden, daß beispielsweise im Winter sonnenabgewandte Fassadenseiten mit der aufgeheizten Luft beaufschlagt werden, so daß eine Art Wärmehülle entsteht.

Andererseits kann die Belüftungsanlage im Sommer auch zu Kühlzwecken eingesetzt werden, wenn im Zuge der Nachtbelüftung Kaltluft beispielsweise über die Nordfassade angesaugt und durch den Fußboden zum Zwecke der Wärmeaufnahme geleitet wird, so daß über den Tag hinweg eine ausreichende Kühlung gewährleistet ist. Die Wärmekapazität des Fußbodens ist so zu wählen, daß die Temperaturschwankungen im Tagesverlauf möglichst klein sind.

Um eine umständliche Verrohrung im Gebäudeinnenraum zu vermeiden, ist es auch möglich, daß der innere Teilraum des Fassadenzwischenraums über eine verschließbare Lüftungsöffnung unmittelbar mit dem Gebäudeinnenraum kommuniziert. Die Lüftungsöffnung kann als in der Innenschale angeordnetes Schwenk-, Kipp- oder Klappfenster ausgebildet sein. Der Fassadenzwischenraum kann dabei im stockwerksbezogen unteren Bereich eine wahlweise verschließbare Zuluftöffnung, im stockwerksbezogen oberen Bereich eine Abluftöffnung und im Bereich der Innenschale eine zum Gebäudeinneren führende, wahlweise verschließbare Lüftungsöffnung aufweisen. Ein Temperaturausgleich über den Umfang des Gebäudes kann dadurch erzielt werden, daß der Fassadenzwischenraum in jedem Stockwerk über den Gebäudeumfang offen und vorzugsweise mit einer in Umfangsrichtung wirkenden Luftumwälzanlage versehen ist. Das Gebäude kann beispielsweise mittels eines Gebläses unter Unterdruck gesetzt werden, so daß beim Lüften über die Lüftungsöffnung Zuluft aus dem Fassadenzwischenraum angesaugt und über ein das Gebläse enthaltendes Fördersystem abgeführt wird. Diese Lösung ist vor allem für Hotelbauten geeignet, bei denen die einzelnen Parzellen schalltechnisch und lufthygienisch gegeneinander abgetrennt werden müssen. Deshalb ist dort die Luftführung geschoßweise und parzellenweise getrennt. Die Geschoßteile und/oder Parzellen des Fassadenzwischenraums können dabei in einen gemeinsamen Abluftkanal oder- kamin münden.

Im folgenden wird die Erfindung anhand einiger in der Zeichnung in schematischer Weise dargestellter Ausführungsbeispiele näher erläutert. Es zeigen
- Fig. 1: ein Schema des Belüftungssystems eines Gebäudegeschosses mit luftdurchströmter Doppelfassade in schaubildlicher Darstellung;
- Fig. 2: einen Schnitt durch das Gebäude im Bereich der Doppelfassade;
- Fig. 3: ein Schema der Deckenbelüftung eines Gebäudegeschosses;
- Fig. 4: ein Schema der Fußbodenbelüftung eines Gebäudegeschosses;
- Fig. 5: ein Schema der Entlüftung eines Gebäudegeschosses;
- Fig. 6 a bis f: einen senkrechten Schnitt durch eine Doppeljalousie in verschiedenen Stellungen der Absorptionsjalousie und der Reflexionsjalousie;
- Fig. 7: ein Schema einer Hochhausfassade mit parzellenweiser Luftzu- und abführung;
- Fig. 8 a und b: ein Schema einer Hochhausfassade mit gegenüber Fig. 7 abgewandelter parzellenweiser Luftzu- und abführung in schaubildlicher und geschnittener Darstellung.

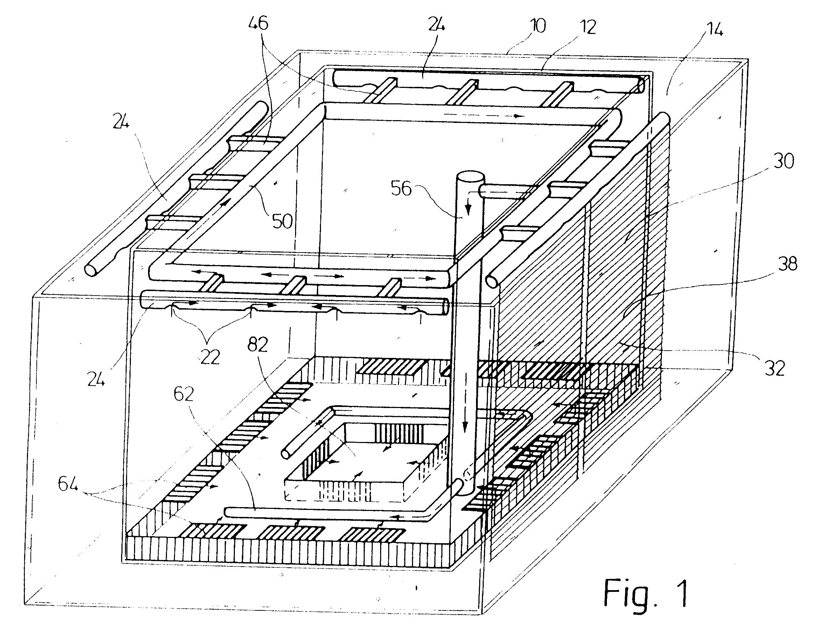

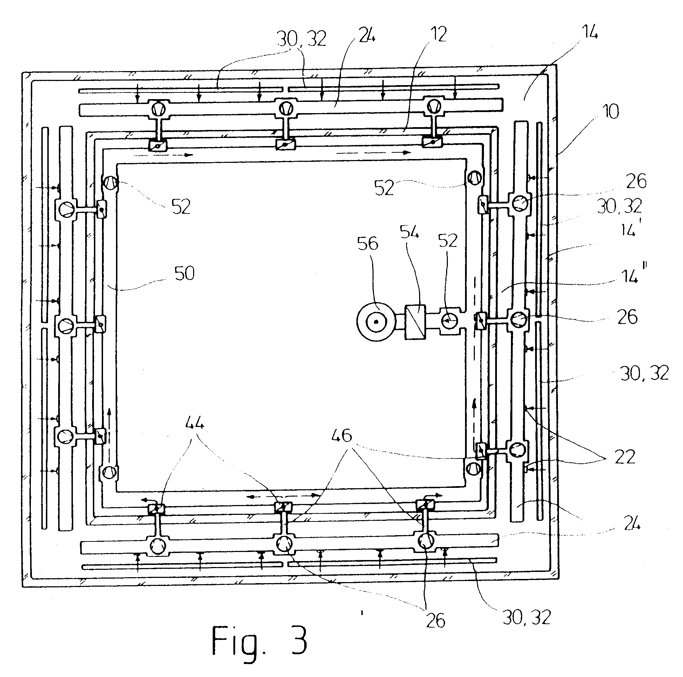

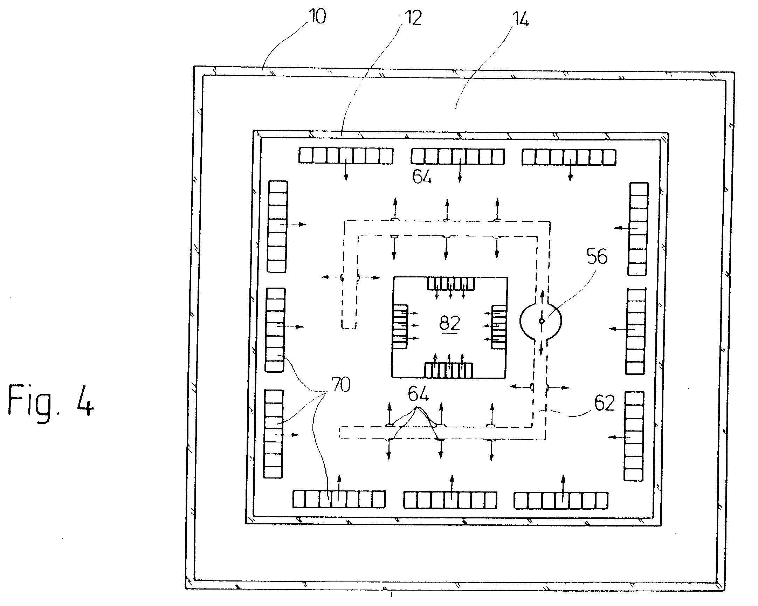

Das in Fig. 1 bis 5 schematisch dargestellte, die Form eines Quaders aufweisende, mehrgeschossige Gebäude weist als Besonderheit eine luftdurchströmte Glasfassade auf, die einen maßgeblichen Beitrag zur Gebäudeklimatisierung leistet. Die Doppelfassade besteht im wesentlichen aus einer doppeltverglasten Außenschale 10 und einer doppeltverglasten Innenschale 12, die im Abstand voneinander angeordnet sind und einen von unten nach oben luftdurchströmten Fassadenzwischenraum 14 begrenzen. Der über ein Insektenschutzgitter 16 mit Außenluft beaufschlagte Lufteintritt 18 befindet sich im Bodenbereich des Erdgeschosses 20. Im oberen Bereich eines jeden Geschosses befindet sich ein mit mehreren Eintrittsöffnungen 22 versehenes Kollektorrohr 24 mit mehreren über die Rohrlänge verteilt angeordneten Sauggebläsen 26, über die Luft aus dem Fassadenzwischenraum 14 angesaugt wird. Weiter befinden sich im Dachbereich mehrere über das Gebäude verteilt angeordnete, verschließbare Luftaustritte 28, über die die im Fassadenzwischenraum aufsteigende Luft unmittelbar an den Außenraum abgeführt werden kann. Die Fassadenzwischenräume 14 der in die verschiedenen Himmelsrichtungen weisenden Fassadenteile bilden voneinander getrennte Lufträume, die in jedem Stockwerk zusätzlich mit von der Decke bis zum Boden reichenden Jalousien 30,32 bestückt sind. Die Jalousien sind jeweils unterteilt in eine obere Reflexionsjalousie 30 mit überwiegend lichtreflektierenden Querlamellen 34 und eine untere Absorptionsjalousie 32 mit überwiegend lichtabsorbierenden Querlamellen 36. Die an einer Trennstelle 38 aneinander angrenzenden Reflexions- und Absorptionsjalousien sind unter Verschiebung der Trennstelle 38 paarweise im Fassadenzwischenraum höhenverstellbar. Außerdem sind die Lamellen 34 der Reflexionsjalousien 30 in ihrer Winkelstellung verstellbar. Die Jalousien haben einmal die Aufgabe, von außen einstrahlende Sonnenenergie zu reflektieren bzw. zu absorbieren und Transmissionsverluste aus dem Gebäudeinneren zu vermeiden. Gleichzeitig soll über die Reflexionsjalousien durch die Wahl einer geeigneten Winkelstellung ihrer Lamellen ein Beitrag zur Innenbeleuchtung des Gebäudes erzielt werden.

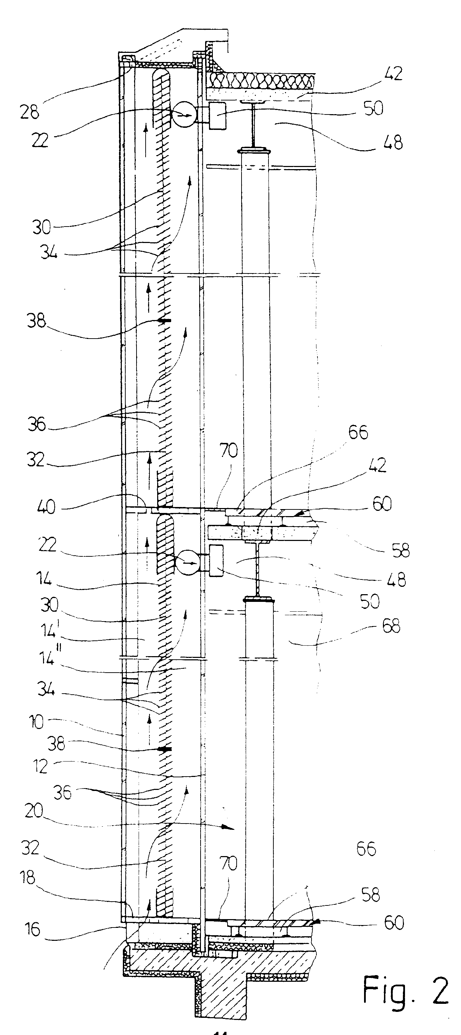

Wie aus Fig. 2 zu ersehen ist, wird die in den Fassadenzwischenraum eintretende Luft durch die im Luftkollektor 24 befindlichen Sauggebläse an den Querlamellen 34,36 vorbei durch die Jalousien 30,32 hindurchgeleitet, so daß sich ein intensiver Wärmeaustausch ergibt. Die aufsteigende Luft wird dadurch insbesondere im Bereich der Absorptionsjalousien 32 auf ein höheres Temperaturniveau aufgeheizt. Diese Wärme kann, wie nachfolgend beschrieben, zur Heizung des Gebäudeinnenraums genutzt werden.

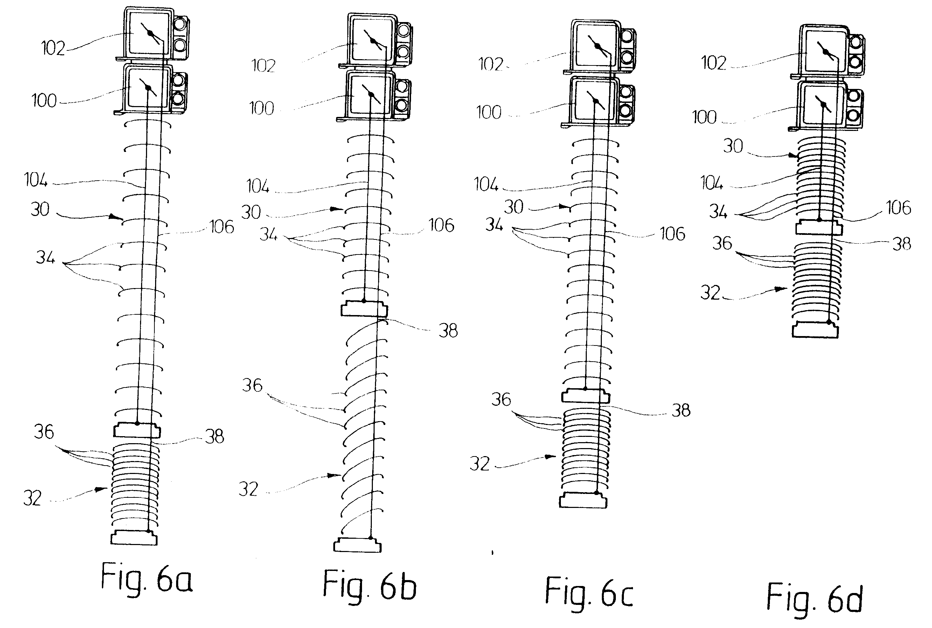

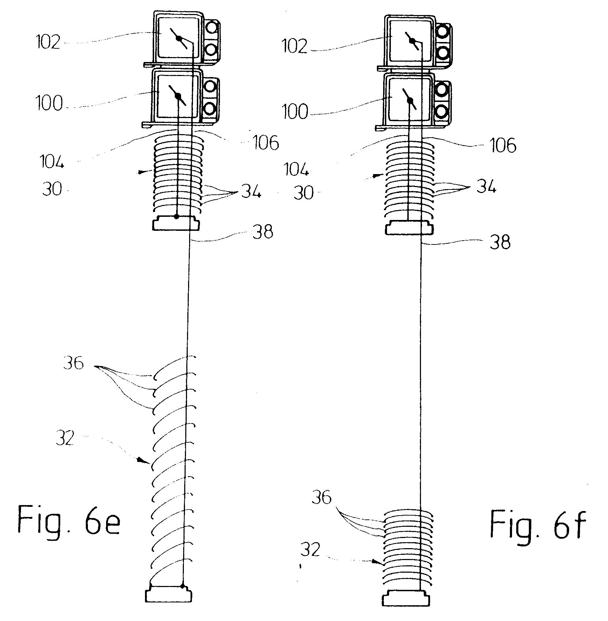

Wie aus den in Fig. 6a bis f gezeigten Detaildarstellungen der Kombinationsjalousien zu ersehen ist, werden die einander zugeordneten Reflexions- und Absorptionsjalousien 30,32 über getrennte Motoren 100,102 und Seilzüge 104,106 unabhängig voneinander betätigt. In den in Fig. 6a bis d gezeigten Stellungen schließen die Reflexionsjalousie 30 und die Absorptionsjalousie 32 an der Trennstelle 38 unmittelbar aneinander an. Dabei sind in den Fig. 6a und b die unterste und oberste Endlage der Trennstelle 38 bei sich über die gesamte Stockwerkshöhe erstreckender Kombinationsjalousie gezeigt. Grundsätzlich ist es jedoch auch möglich, die Kombinationsjalousie von der in Fig. 6a gezeigten untersten Endlage (Fig. 6a) über eine Zwischenlage (Fig. 6c) in eine angehobene Endlage (Fig. 6d) zu bringen, in welcher der untere Teil der Glasfassade jalousienfrei ist. In den Fig. 6e und f ist eine weitere Öffnungsvariante zu erkennen, bei welcher durch Aufziehen der Reflexionsjalousie und Absenken der Absorptionsjalousie 32 im Bereich der Trennstelle 38 eine jalousienfreie Lücke erzeugt wird. Die Kombinationsjalousie hat vor allem die Aufgabe, im unteren Bereich die Sonnenenergie thermisch und im oberen Bereich lichttechnisch zu nutzen. Deshalb wird die Kombinationsjalousie mit ihrer Trennstelle 38 nur über einen Teil der Fassadenhöhe bis etwa Mannhöhe angehoben (Fig. 6b und e). Im Sommerfall wird die Absorptionsjalousie 32 ganz nach unten gefahren (Fig. 6a und f). Die Reflexionsjalousie hat in diesem Fall vor allem eine Abschattungs- und Abschirmfunktion für Licht und Wärme. Die Lichtlenkung und die thermische Reflexion wird durch Einstellung der Winkellage der Querlamellen 34 gesteuert.

Die Absorptionsjalousie 32 steht üblicherweise unter einem fest eingestellten Winkel, beispielsweise 25° gegenüber der Senkrechten. Die Jalousielamellen sollen etwa senkrecht zur Sonneneinstrahlung sein, um vor allem im Winter ein Maximum der Lichtstrahlen zu absorbieren. Die Lamellen 36 der Absorptionsjalousie 32 haben hierbei die Funktion einer Wärmeübertragungsfläche für die von der Außenseite der Doppelfassade in den Fassadenzwischenraum eingeführte Zuluft.

Durch die Jalousien 30,32 wird der Fassadenzwischenraum 14 in einen äußeren Teilraum 14′ und einen inneren Teilraum 14˝ unterteilt. Der bodenseitige Lufteintritt 18 und der dachseitige Luftaustritt 28 befinden sich im Bereich der äußeren Teilräume 14′, die über die Stockwerke hinweg durch Gitterroste 40 miteinander verbunden sind. Andererseits befinden sich die Luftkollektoren 24 auf der Seite der inneren Teilräume 14˝ jeweils in der Höhe der zugehörigen Geschoßdecke 42. Die inneren Teilräume 14˝ sind zwischen den Stockwerken gegen einen unmittelbaren Luftdurchtritt geschlossen.

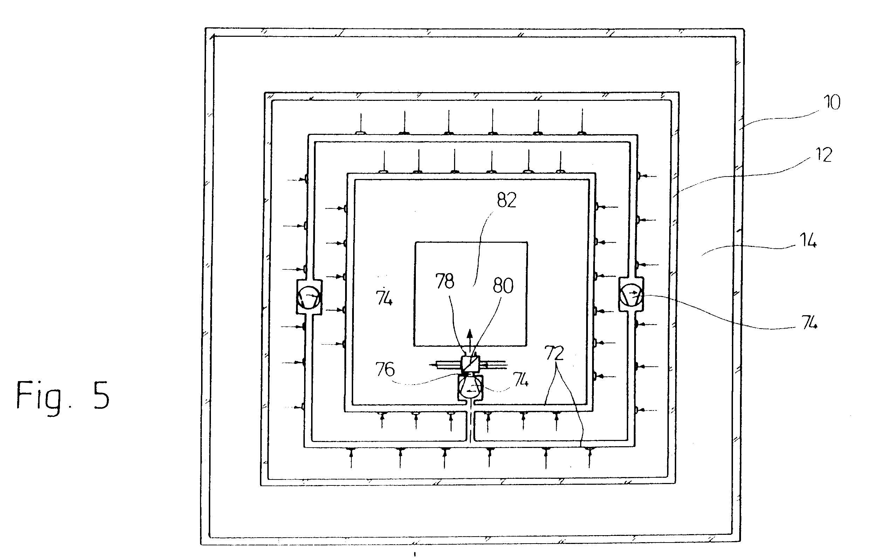

Die Luftkollektoren 24 stehen über mehrere, mit Luftklappen 44 bestückte Verbindungsrohre 46 mit einem im Deckenbereich 48 des Stockwerks umlaufenden Transportrohr 50 in Verbindung, das über ein zusätzliches Gebläse 52 und eine Heizstrecke 54 in ein Luftfallrohr 56 mündet. Das Luftfallrohr 56 greift mit seinem unteren Ende in den Zwischenraum 58 eines Doppelbodens 60 ein, und mündet dort in ein sich über den Bodenzwischenraum 58 erstreckendes Verteilerrohr 62, das über eine Vielzahl von über seine Länge verteilt angeordneten Luftauslässen 64 mit dem Bodenzwischenraum 58 kommuniziert. Die beispielsweise aus Granit bestehende Oberplatte 66 des Doppelbodens 60 dient dabei als Wärmespeicher, der Wärme aus der aus dem Verteilerrohr 62 austretenden Luft aufnimmt und allmählich an den Innenraum 68 des Gebäudes abgibt. Die gegenenfalls gefilterte Luft wird zusätzlich über im Bodenbereich befindliche Luftaustrittsschächte 70 zu Heizungs- und Belüftungszwecken an den Gebäudeinnenraum 68 abgegeben. Diese Luft wird im Deckenbereich über Sammelrohre 72, die mit Sauggebläsen 74 bestückt sind, aufgenommen und über einen Abluftkanal 76 und einen im Dachbereich angeordneten Kamin 87 an die Außenluft abgegeben. Bei dem in Fig. 5 gezeigten Ausführungsbeispiel ist der Abluftkanal zusätzlich durch einen Wärmeaustauscher 80 hindurchgeführt, in welchem über das Dach angesaugte Zuluft für Heizungszwecke beispielsweise im fassadenfreien Untergeschoß vorgeheizt werden kann.

Im Zentrum des Gebäudes befindet sich ein sich über sämtliche Stockwerke erstreckender Lichthof 82, der über eine Glaskuppel, die durch ein Sonnensegel abschaltbar ist, wesentlich zur Raumklimatisierung und Beleuchtung des Gebäudes beiträgt. Einen weiteren Beitrag hierzu leisten die im Bodenbereich des Lichthofs auf der Ebene des Erdgeschosses 20 befindlichen Belüftungsschächte 70, aus denen Luft in den Gebäudeinnenraum 68 austritt.

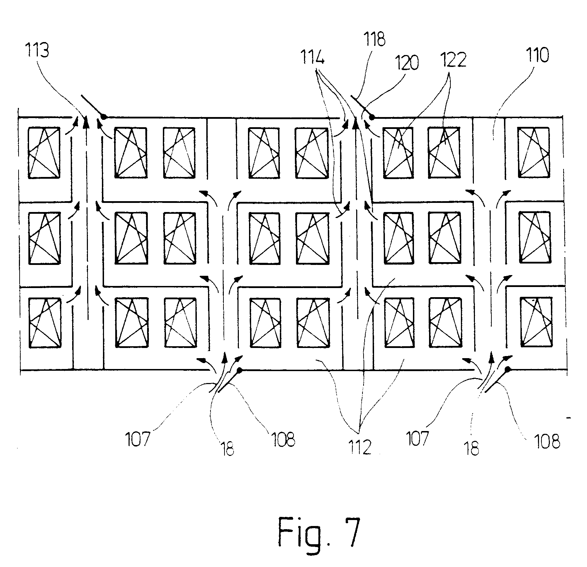

In Fig. 7 ist die Luftführung in der Doppelfassade eines Hochhauses schematisch dargestellt. Die von der Außenseite kommende Zuluft (Pfeile 107) gelangt über die mit einer Klappe 108 verschließbare Lufteintrittsöffnung in einen Zuluftschacht 110, der sich bei dem gezeigten Ausführungsbeispiel über die gesamte Gebäudehöhe erstreckt. Die Fassade ist in einzelne Parzellen 112 unterteilt, die auf der einen Seite über den Zuluftschacht 110 mit Zuluft beaufschlagbar sind und die über eine Abluftöffnung 114 in einen Abluftkamin 116 münden, über den die Abluft (Pfeile 113) über eine durch eine Klappe 118 verschließbare Kaminöffnung 120 über Dach abgeblasen werden kann. Der Fassadenzwischenraum ist über in der Innenschale 12 befindliche Innenfenster 122 zum Zwecke der Raumbelüftung zugänglich. Die Energieübertragung wird über die in Fig. 7 nicht dargestellten Kombinationsjalousien 30,32 gesteuert.

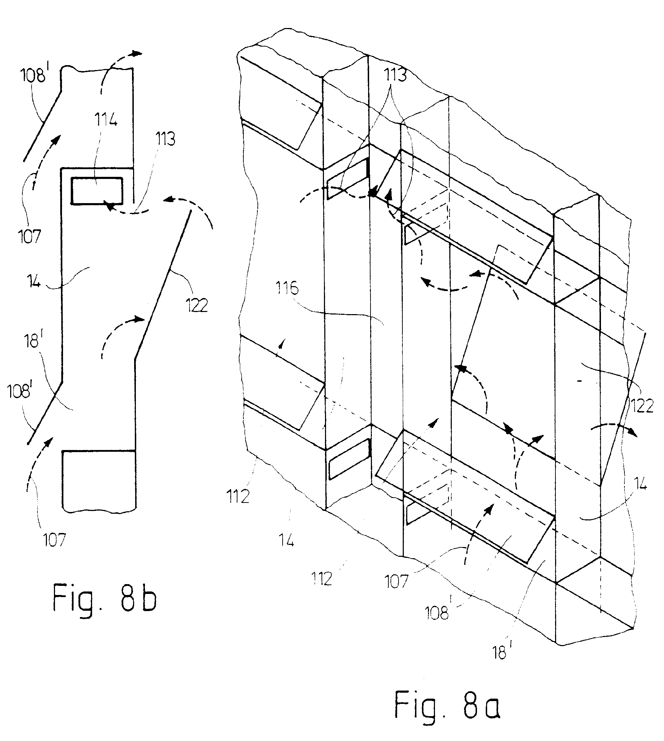

Die in Fig. 8a und b gezeigte Fassadenkonstruktion unterscheidet sich von dem Ausführungsbeispiel nach Fig. 7 dadurch, daß die einzelnen Parzellen 112 der Doppelfassade eines Hochhauses jeweils über durch eine Klappe 108′ verschließbare Lufteintrittsöffnungen 18′ mit Zuluft aus dem Außenraum beaufschlagbar sind, so daß der gemeinsame Zuluftschacht 110 entfällt. Die Be- und Entlüftung des zu einer Parzelle 112 gehörenden Gebäudeinnenraums erfolgt auch hier über ein in der Innenschale 12 befindliches Innenfenster 122. Die Klappenstellung 108′ kann in Abhängigkeit vom Winddruck und vom Frischluftbedarf im Gebäudeinnenraum geregelt werden. Die Abluft (Pfeile 113) wird wiederum über einen zentralen Abluftkamin 116 über Dach abgeführt. Im Abluftkamin kann ein nicht dargestelltes Abluftgebläse angeordnet sein. Auch im Gebäudeinneren kann ein Unterdruck erzeugt werden, so daß beim Lüften über die Innenfenster 122 Luft aus dem Fassadenzwischenraum angesaugt und über ein Fördersystem (Gebläse) abgeführt werden kann.

Die in Fig. 7 und 8 gezeigten Konstruktionen sind vor allem für Hotelbauten geeignet, bei denen die einzelnen Parzellen (Hotelzimmer oder Suiten) schalltechnisch und lufthygienisch gegeneinander abgetrennt werden müssen.

Zusammenfassend ist folgendes festzustellen: Die Erfindung bezieht sich auf eine Anlage zur Gebäudeklimatisierung mit einer luftdurchströmten Glasfassade 10,12. Im Fassadenzwischenraum 14 zwischen der Außen- und Innenschale 10,12 befinden sich Jalousien 30,32, die in jedem Stockwerk in eine obere Reflexionsjalousie 30 mit überwiegend lichtreflektierenden Querlamellen 34 und eine an diese nach unten angrenzende untere Absorptionsjalousie 32 mit überwiegend lichtabsorbierenden Querlamellen 36 unterteilt sind. Die sich paarweise über die Höhe des jeweiligen Stockwerks erstreckenden Reflexions- und Absorptionsjalousien 30,32 sind zu Regelungszwecken gemeinsam höhenverstellbar. Der Fassadenzwischenraum 14 ist im stockwerksbezogen unteren Bereich des zwischen Außenschale 10 und Jalousie 30,32 befindlichen äußeren Teilraums 14′ mit Zuluft beaufschlagbar, während die Luftkollektoren 24 im stockwerksbezogen oberen Bereich des zwischen Jalousie 30,32 und Innenschale 12 befindlichen inneren Teilraums 14˝ angeordnet sind. Die vor allem an den Querlamellen 36 der Absorptionsjalousien 32 aufgeheizte Luft wird zu Heizungs- und Belüftungszwecken in den Innenraum 68 des Gebäudes geleitet.

## Patentansprüche

1. Anlage zur Klimatisierung eines Gebäudes mit einer aus einer lichtdurchlässigen Außenschale (10) und einer einen Gebäudeinnenraum begrenzenden lichtdurchlässigen Innenschale (12) bestehenden, im Fassadenzwischenraum (14) zwischen Außen- und Innenschale (10,12) eine Mehrzahl von mit Lamellen (34, 36) versehenen Jalousien (30,32) aufweisenden, von der Gebäudeaußenseite her mit Zuluft beaufschlagbaren, sich gegebenenfalls über mehrere Stockwerke des Gebäudes erstreckenden Doppelfassade, **dadurch gekennzeichnet**, daß die Jalousien in jedem Stockwerk in eine obere Reflexionsjalousie (30) mit überwiegend lichtreflektierenden Querlamellen (34) und eine an einer horizontalen Trennstelle (38) an diese nach unten angrenzende untere Absorptionsjalousie (32) mit überwiegend lichtabsorbierenden Querlamellen (36) unterteilt sind, daß die sich paarweise über die Höhe oder eine Teilhöhe des jeweiligen Stockwerks erstreckenden Reflexions- und Absorptionsjalousien (30,32) unter Verschiebung der Trennstelle (38) höhenverstellbar sind, daß der Fassadenzwischenraum im stockwerksbezogen unteren Bereich des zwischen Außenschale (10) und Jalousie (30,32) befindlichen äußeren Teilraums (14′) mit Zuluft beaufschlagbar ist, und daß der Gebäudeinnenraum über den zwischen Jalousie (30,32) und Innenschale (12) befindlichen inneren Teilraum (14˝) des Fassadenzwischenraums mit der an den Querlamellen (34,36) gegebenenfalls unter Wärmeaufnahme vorbeigeführten Zuluft belüftbar ist.

2. Anlage nach Anspruch 1, **dadurch gekennzeichnet**, daß im stockwerksbezogen oberen Bereich des zwischen Jalousie (30,32) und Innenschale (12) befindlichen Teilraums (14˝) eine Abluftöffnung (114) oder ein verschließbarer Luftkollektor (24) angeordnet ist.

3. Anlage nach Anspruch 1 oder 2, **dadurch gekennzeichnet**, daß die Innenschale (12) und/oder die Außenschale (10) aus vorzugsweise doppeltverglastem Isolierglas bestehen.

4. Anlage nach einem der Ansprüche 1 bis 3, **dadurch gekennzeichnet**, daß die Querlamellen (34) der Reflexionsjalousie (30) aus vorzugsweise poliertem Aluminium bestehen.

5. Anlage nach einem der Ansprüche 1 bis 4, **dadurch gekennzeichnet**, daß die Querlamellen (36) der Absorptionsjalousien (32) lichtabsorbierend, vorzugsweise mattschwarz eingefärbt sind.

6. Anlage nach einem der Ansprüche 1 bis 5, **dadurch gekennzeichnet**, daß die Trennstelle (38) von etwa der Unterkante des jeweiligen Stockwerks bis zu einer vorgegebenen Grenzhöhe von 1/2 bis 3/4 der Stockwerkshöhe nach oben verschiebbar ist.

7. Anlage nach einem der Ansprüche 1 bis 6, **dadurch gekennzeichnet**, daß die Reflexionsjalousien (30) in ihrer Winkelstellung verstellbare Querlamellen (34) aufweisen.

8. Anlage nach einem der Ansprüche 1 bis 7, **dadurch gekennzeichnet**, daß die Querlamellen (36) der Absorptionsjalousien (32) in ihrer Winkelstellung unverstellbar sind.

9. Anlage nach einem der Ansprüche 1 bis 8, **dadurch gekennzeichnet**, daß die einander zugeordneten Reflexions- und Absorptionsjalousien (30,32) unabhängig voneinander betätigbar sind.

10. Anlage nach Anspruch 9, **dadurch gekennzeichnet**, daß die einander zugeordneten Reflexions- und Absorptionsjalousien (30,32) über getrennte Seilzüge (104, 106) und Motoren (100,102) betätigbar sind.

11. Anlage nach einem der Ansprüche 1 bis 10, **dadurch gekennzeichnet**, daß die einander zugeordneten Reflexions- und Absorptionsjalousien (30,32) unter Bildung einer Lücke im Bereich der Trennstelle (38) in entgegengesetzten Richtungen heb- und senkbar sind.

12. Anlage nach einem der Ansprüche 1 bis 11, **dadurch gekennzeichnet**, daß die Absorptionsjalousie (36) mit ihrer Oberkante nur über eine Teilhöhe des jeweiligen Stockwerks anhebbar ist.

13. Anlage nach einem der Ansprüche 1 bis 12, **dadurch gekennzeichnet**, daß die Fassadenzwischenräume (14) über die verschiedenen Stockwerke auf der Seite der äußeren Teilräume (14′), vorzugsweise über begehbare Gitterroste (40), luftdurchlässig miteinander verbunden sind.

14. Anlage nach einem der Ansprüche 2 bis 13, **dadurch gekennzeichnet**, daß die Luft über im Bereich der Luftkollektoren (24) angeordnete Sauggebläse (26) aus dem Fassadenzwischenraum (14) absaugbar ist.

15. Anlage nach Anspruch 14, **dadurch gekennzeichnet**, daß die über die Luftkollektoren (24) aus dem Fassadenzwischenraum (14) angesaugte Luft durch eine Zusatzheizstrecke (54) geleitet wird.

16. Anlage nach einem der Ansprüche 2 bis 15, **dadurch gekennzeichnet**, daß die Luftkollektoren (24) über ein Transportrohr (50,56) mit einem mit dem Innenraum (68) des betreffenden Gebäudestockwerks in Verbindung stehenden Wärmetauscher und/oder Wärmespeicher (60) kommunizieren.

17. Anlage nach Anspruch 16, **dadurch gekennzeichnet**, daß die Luftkollektoren (24) vorzugsweise über ein als Fallrohr (56) ausgebildetes Transportrohr in einen in einem Doppelfußboden (60) angeordneten Luftverteiler (62) und/oder Wärmetauscherraum (58) münden, wobei der Doppelfußboden (60,66) als mit dem Innenraum (68) des Gebäudes in Verbindung stehender Wärmespeicher ausgebildet ist.

18. Anlage nach einem der Ansprüche 15 bis 17, **dadurch gekennzeichnet**, daß zumindest ein Teil der von den Luftkollektoren (24) kommenden Luft über vorzugsweise bodenseitig angeordnete Luftauslässe (70) in den Gebäudeinnenraum (68) geleitet und aus diesen vorzugsweise deckenseitig über einen Abluftkanal (76) nach dem Gebäudeäußeren abgeführt wird.

19. Anlage nach Anspruch 18, **dadurch gekennzeichnet**, daß der Abluftkanal (76) durch einen Wärmeaustauscher (80) zur Aufheizung von vorzugsweise dachseitig angesaugter Frischluft hindurchgeführt ist.

20. Anlage nach Anspruch 19, **dadurch gekennzeichnet**, daß die über den Wärmetauscher (80) geleitete Frischluft gegebenenfalls über eine zusätzliche Heizstrecke in ein vorzugsweise doppelfassadenloses Stockwerk zum Zwecke der Raumklimatisierung geleitet wird.

21. Anlage nach einem der Ansprüche 2 bis 20, **dadurch gekennzeichnet**, daß mehrere Luftkollektoren (24) eines Stockwerks in ein gemeinsames Transport- und/oder Fallrohr (50,56) münden.

22. Anlage nach einem der Ansprüche 1 bis 21, **dadurch gekennzeichnet**, daß die nach unterschiedlichen Himmelsrichtungen ausgerichteten Fassadenzwischenräume (14) des Gebäudes voneinander getrennte Lufträume bilden.

23. Anlagen nach einem der Ansprüche 1 bis 22, **dadurch gekennzeichnet**, daß die nach unterschiedlichen Himmelsrichtungen ausgerichteten Fassadenzwischenräume (14) des Gebäudes mit unabhängig voneinander verschließbaren bodenseitigen Lufteintrittsöffnungen (18) und/oder dachseitigen Luftaustrittsöffnungen (28) versehen sind.

24. Anlage nach einem der Ansprüche 2 bis 23, **dadurch gekennzeichnet**, daß die Abluftöffnung (114) oder der Luftkollektor (24) unmittelbar in einen dachseitig offenen Abluftkanal oder -kamin (116) mündet.

25. Anlage nach einem der Ansprüche 1 bis 24, **dadurch gekennzeichnet**, daß der innere Teilraum (14˝) über eine verschließbare Lüftungsöffnung (122) mit dem Gebäudeinnenraum kommuniziert.

26. Anlage nach Anspruch 25, **dadurch gekennzeichnet**, daß die Lüftungsöffnung als in der Innenschale (12) angeordnetes Schwenk-, Kipp- oder Klappfenster (122) ausgebildet ist.

27. Anlage nach einem der Ansprüche 1 bis 26, **dadurch** **gekennzeichnet,** daß der Fassadenzwischenraum (14) im Stockwerksbezogen unteren Bereich eine wahlweise verschließbare Zuluftöffnung (18′), im stockwerksbezogen oberen Bereich eine wahlweise verschließbare Abluftöffnung (114) und im Bereich der Innenschale (12) eine zum Gebäudeinneren führende, wahlweise verschließbare Lüftungsöffnung (122) aufweist.

28. Anlage nach einem der Ansprüche 1 bis 27, **dadurch gekennzeichnet**, daß der Fassadenzwischenraum (14) auf Stockwerkshöhe über den Gebäudeumfang offen und vorzugsweise mit einer in Umfangsrichtung wirkenden Luftumwälzeinrichtung versehen ist.

29. Anlage nach einem der Ansprüche 1 bis 28, **dadurch gekennzeichnet**, daß der Fassadenzwischenraum (14) geschoßweise unterteilt und getrennt mit Zuluft beaufschlagbar ist.

30. Anlage nach einem der Ansprüche 1 bis 29, **dadurch gekennzeichnet**, daß der Fassadenzwischenraum innerhalb eines Geschosses in Gebäudeumfangsrichtung in Parzellen (112) unterteilt und getrennt mit Zuluft beaufschlagbar ist.

31. Anlage nach Anspruch 29 oder 30, **dadurch gekennzeichnet**, daß die Geschoßteile und/oder Parzellen (112) des Fassadenzwischenraums (14) in einen gemeinsamen Abluftkamin (116) münden.

## Claims

1. System for air conditioning a building, having a double façade which consists of a translucent outer shell (10) and a translucent inner shell (12) delimiting the interior of the building, has, in the intermediate space (14) in the façade between the outer and inner shell (10, 12), a plurality of blinds (30, 32) provided with lamellae (34, 36), can have supply air admitted to it from the outside of the building and may optionally extend over a number of storeys of the building, **characterized in that** the blinds in each storey are subdivided into an upper reflection blind (30) having predominantly light-reflecting transverse lamellae (34) and a lower absorption blind (32) adjoining the said blind in the downward direction at a horizontal separation point (38) and having predominantly light-absorbing lamellae (36), that the reflection and absorption blinds (30, 32) extending in pairs over the height, or part of the height, of the particular storey are vertically adjustable with displacement of the separation point (38), that the intermediate space in the façade can have supply air admitted to it in the lower region, referred to the storey, of the outer partial space (14′) located between the outer shell (10) and the blind (30, 32), and that the interior of the building can be ventilated, by way of the inner partial space (14˝) of the intermediate space in the façade, which inner partial space is located between the blind (30, 32) and the inner shell (12), with the supply air which is conducted past the transverse lamellae (34, 36), optionally with the absorption of heat.

2. System according to claim 1, **characterized in that** a waste air aperture (114) or a closable air collector (24) is disposed in the upper region, referred to the storey, of the partial space (14˝) located between the blind (30, 32) and the inner shell (12).

3. System according to claim 1 or 2, **characterized in that** the inner shell (12) and/or the outer shell (10) consist of preferably double-glazed insulating glass.

4. System according to one of claims 1 to 3, **characterized in that** the transverse lamellae (34) of the reflection blind (30) consist of preferably polished aluminium.

5. System according to one of claims 1 to 4, **characterized in that** the transverse lamellae (36) of the absorption blinds (32) are of a light-absorbing colour, preferably matt black.

6. System according to one of claims 1 to 5, **characterized in that** the separation point (38) can be displaced upwards from about the lower edge of the particular storey to a predetermined limiting height of 1/2 to 3/4 of the height of the storey.

7. System according to one of claims 1 to 6, **characterized in that** the reflection blinds (30) have transverse lamellae (34) which are adjustable in their angular position.

8. System according to one of claims 1 to 7, **characterized in that** the transverse lamellae (36) of the absorption blinds (32) are non-adjustable in their angular position.

9. System according to one of claims 1 to 8, **characterized in that** the reflection and absorption blinds (30, 32) associated with one another can be actuated independently of one another.

10. System according to claim 9, **characterized in that** the reflection and absorption blinds (30, 32) associated with one another can be actuated by way of separate cable pulls (104, 106) and motors (100, 102).

11. System according to one of claims 1 to 10, **characterized in that** the reflection and absorption blinds (30, 32) associated with one another can be raised and lowered in opposite directions, forming a gap in the region of the separation point (38).

12. System according to one of Claims 1 to 11, **characterized in that** the absorption blind (36) can be raised with its upper edge only over part of the height of the particular storey.

13. System according to one of claims 1 to 12, **characterized in that** the intermediate spaces (14) in the façade are connected to one another in an air-permeable manner across the various storeys on the side of the outer partial spaces (14′), preferably by way of screen gratings (40) which can be walked on.

14. System according to one of claims 2 to 13, **characterized in that** the air can be sucked off from the intermediate space (14) in the facade by way of fans (26) disposed in the region of the air collectors (24).

15. System according to claim 14, **characterized in that** the air sucked in from the intermediate space (14) in the facade by way of the air collectors (24) is conducted through an additional heating tract (54).

16. System according to one of claims 2 to 15, **characterized in that** the air collectors (24) communicate, by way of a transport pipe (50, 56), with a heat exchanger and/or heat accumulator (60) communicating with the interior (68) of the relevant storey of the building.

17. System according to claim 16, **characterized in that** the air collectors (24) discharge, preferably by way of a transport pipe constructed as a downpipe (56), into an air distributor (62) and/or heat exchanger space (58) disposed in a double floor (60), the double floor (60, 66) being constructed as a heat accumulator communicating with the interior (68) of the building.

18. System according to one of claims 15 to 17, **characterized in that** at least part of the air coming from the air collectors (24) is conducted, by way of air outlets (70) preferably disposed at the floor, into the interior (68) of the building and away from the said interior, preferably at the ceiling, by way of a waste air duct (76) to the outside of the building.

19. System according to claim 18, **characterized in that** the waste air duct (76) is routed through a heat exchanger (80) for heating up fresh air which is preferably sucked in at the roof.

20. System according to claim 19, **characterized in that** the fresh air conducted by way of the heat exchanger (80) is conducted, optionally by way of an additional heating tract, into a storey which is preferably devoid of a double façade, for space air conditioning purposes.

21. System according to one of claims 2 to 20, **characterized in that** a number of air collectors (24) in a storey discharge into a common transport pipe and/or downpipe (50, 56).

22. System according to one of claims 1 to 21, **characterized in that** the intermediate spaces (14) in the façades of the building which are oriented towards different points of the compass form air spaces which are separated from one another.

23. System according to one of claims 1 to 22, **characterized in that** the intermediate spaces (14) in the facades of the building which are oriented towards different points of the compass are provided with air entry apertures (18) at the floor and/or air exit apertures (28) at the roof which can be closed independently of one another.

24. System according to one of claims 2 to 23, **characterized in that** the waste air aperture (114) or the air collector (24) discharges directly into a waste air duct or waste air flue (116) which is open at the roof.

25. System according to one of claims 1 to 24, **characterized in that** the inner partial space (14˝) communicates with the interior of the building by way of a closable ventilation aperture (122).

26. System according to claim 25, **characterized in that** the ventilation aperture is constructed as a pivoting, tilting or folding window (122) disposed in the inner shell (12).

27. System according to one of claims 1 to 26, **characterized in that** the intermediate space (14) in the façade has, in the lower region referred to the storey, a selectively closable supply air aperture (18′), in the upper region referred to the storey, a selectively closable waste air aperture (114) and, in the region of the inner shell (12), a selectively closable ventilation aperture (122) leading to the interior of the building.

28. System according to one of claims 1 to 27, **characterized in that** the intermediate space (14) in the facade is open at storey height over the periphery of the building and is preferably provided with an air circulating arrangement operating in the peripheral direction.

29. System according to one of claims 1 to 28, **characterized in that** the intermediate space (14) in the facade is subdivided, and can have supply air admitted to it separately, for each storey.

30. System according to one of claims 1 to 29, **characterized in that** the intermediate space in the facade is subdivided into compartments (112), and can have supply air admitted to it separately, within a storey in the peripheral direction of the building.

31. System according to claim 29 or 30, **characterized in that** the parts of a floor and/or compartments (112) of the intermediate space (14) in the facade discharge into a common waste air flue (116).

## Revendications

1. Installation de climatisation pour un bâtiment avec une double façade qui comprend une coque extérieure (10) translucide et une coque intérieure (12) translucide délimitant un espace intérieur de bâtiment, présente un grand nombre de jalousies (30,32) pourvues de lamelles (34,36) dans l'espace intermédiaire de façade (14) entre la coque extérieure et la coque intérieure (10,12), peut être alimentée en air frais par le côté extérieur du bâtiment et s'étend éventuellement sur plusieurs étages du bâtiment, caractérisée en ce que les jalousies sont subdivisées à chaque étage en une jalousie à réflexion (30) supérieure avec principalement des lamelles transversales (34) qui réfléchissent la lumière et une jalousie à absorption (32) inférieure contiguë vers le bas aux lamelles transversales à un point de séparation horizontal (38) avec principalement des lamelles transversales (36) qui absorbent la lumière, de sorte que les jalousies à réflexion et à absorption (30,32) s'étendant par paires sur la hauteur ou une hauteur partielle de l'étage concerné sont réglables en hauteur avec un déplacement du point de séparation (38), que l'espace intermédiaire de façade peut être alimenté en air frais dans la zone inférieure spécifique à l'étage de la zone partielle (14′) extérieure se trouvant entre la coque extérieure (10) et la jalousie (30,32) et que l'espace intérieur du bâtiment peut être ventilé par l'espace partiel (14˝) intérieur, situé entre la jalousie (30,32) et la coque intérieure (12), de l'espace intermédiaire de la façade avec l'air frais qui passe sur les lamelles transversales (34,36) en absorbant éventuellement de la chaleur.

2. Installation selon la revendication 1, caractérisée en ce que, dans la zone supérieure spécifique à l'étage de l'espace partiel (14˝) se trouvant entre la jalousie (30,32) et la coque intérieure (12), on dispose un orifice d'évacuation d'air (114) ou un collecteur d'air (24) obturable.

3. Installation selon la revendication 1 ou 2, caractérisée en ce que la coque intérieure (12) et/ou la coque extérieure (10) sont constituées de verre isolant de préférence avec vitrage double.

4. Installation selon l'une quelconque des revendications 1 à 3, caractérisée en ce que les lamelles transversales (34) de la jalousie à réflexion (30) sont en aluminium de préférence poli.

5. Installation selon l'une quelconque des revendications 1 à 4, caractérisée en ce que les lamelles transversales (36) des jalousies à absorption (32) sont teintées dans une couleur absorbant la lumière, de préférence en noir mat.

6. Installation selon l'une quelconque des revendications 1 à 5, caractérisée en ce que le point de séparation (38) peut être déplacé vers le haut depuis à peu près le bord inférieur de l'étage concerné jusqu'à une hauteur limite prédéterminée correspondant entre 1/2 et 3/4 de la hauteur d'étage.

7. Installation selon l'une quelconque des revendications 1 à 6, caractérisée en ce que les jalousies à réflexion (30) présentent des lamelles transversales (34) réglables dans leur position angulaire.

8. Installation selon l'une quelconque des revendications 1 à 7, caractérisée en ce que les lamelles transversales (36) des jalousies à absorption (32) ne sont pas réglables dans leur position angulaire.

9. Installation selon l'une quelconque des revendications 1 à 8, caractérisée en ce que les jalousies à réflexion et à absorption (30,32) mutuellement associées peuvent être actionnées indépendamment les unes des autres.

10. Installation selon la revendication 9, caractérisée en ce que les jalousies à réflexion et à absorption (30,32) mutuellement associées peuvent être actionnées par des tirettes à câbles (104,106) et des moteurs (100,102) séparés.

11. Installation selon l'une quelconque des revendications 1 à 10, caractérisée en ce que les jalousies à réflexion et à absorption (30,32) mutuellement associées peuvent être levées et abaissées dans des directions opposées en formant un vide dans la zone du point du séparation (38).

12. Installation selon l'une quelconque des revendications 1 à 11, caractérisée en ce que la jalousie à absorption (36) avec son bord supérieur ne peut être levée que sur une hauteur partielle de l'étage concerné.

13. Installation selon l'une quelconque des revendications 1 à 12, caractérisée en ce que les espaces intermédiaires de façade (14) sont reliés entre eux de façon perméable à l'air par les différents étages du côté des espaces partiels (14′) extérieurs, de préférence par des caillebotis (40) praticables.

14. Installation selon l'une quelconque des revendications 2 à 13, caractérisée en ce que l'air peut être aspiré hors de l'espace intermédiaire de façade (14) par des ventilateurs aspirants (26) disposés dans la zone des collecteurs d'air (24).

15. Installation selon la revendication 14, caractérisée en ce que l'air aspiré par les collecteurs d'air (24) hors de l'espace intermédiaire de façade (14) est guidé par une section de chauffage supplémentaire (54).

16. Installation selon l'une quelconque des revendications 2 à 15, caractérisée en ce que les collecteurs d'air (24) communiquent par un tuyau de transport (50,56) avec un échangeur de chaleur et/ou un accumulateur de chaleur (60) communiquant avec l'intérieur (68) de l'étage de bâtiment concerné.

17. Installation selon la revendication 16, caractérisée en ce que les collecteurs d'air (24) débouchent de préférence par un tuyau de transport conçu comme un tuyau de descente (56) dans un diffuseur d'air (62) et/ou espace échangeur de chaleur (58) disposé dans un double plancher (60), le double plancher (60,66) étant réalisé comme un accumulateur de chaleur communiquant avec l'intérieur (68) du bâtiment.

18. Installation selon l'une quelconque des revendications 15 à 17, caractérisée en ce qu'au moins une partie de l'air arrivant des collecteurs d'air (24) est dirigée par des sorties d'air (70) disposées de préférence côté sol à l'intérieur du bâtiment (68) et est évacuée à partir de là, de préférence côté plafond vers l'extérieur du bâtiment par un conduit d'évacuation (76).

19. Installation selon la revendication 18, caractérisée en ce que le conduit d'évacuation d'air (76) est passé à travers un échangeur de chaleur (80) pour le réchauffement d'air frais aspiré de préférence côté toiture.

20. Installation selon la revendication 19, caractérisée en ce que l'air frais dirigé par l'échangeur de chaleur (80) est acheminé éventuellement par une section de chauffage supplémentaire à un étage de préférence sans double façade pour la climatisation des locaux.

21. Installation selon l'une quelconque des revendications 2 à 20, caractérisée en ce que plusieurs collecteurs d'air (24) d'un étage débouchent dans un tuyau de transport et/ou tuyau de descente (50,56) commun.

22. Installation selon l'une quelconque des revendications 1 à 21, caractérisée en ce que les espaces intermédiaires de façade (14) du bâtiment, orientés vers différents points cardinaux, forment des espaces d'air séparés les uns des autres.

23. Installation selon l'une quelconque des revendications 1 à 22, caractérisée en ce que les espaces intermédiaires de façade (14) du bâtiment, orientés vers différents points cardinaux, sont dotés d'orifices d'admission d'air (18) disposés côté sol et obturables indépendamment les uns des autres et/ou d'orifices d'évacuation d'air (28) disposés côté toiture.

24. Installation selon l'une quelconque des revendications 2 à 23, caractérisée en ce que l'orifice d'évacuation d'air (114) ou le collecteur d'air (24) débouche directement dans un conduit ou une cheminée d'évacuation d'air (116) avec ouverture côté toiture.

25. Installation selon l'une quelconque des revendications 1 à 24, caractérisée en ce que l'espace partiel (14˝) intérieur communique par une prise d'air (122) obturable avec l'intérieur du bâtiment.

26. Installation selon la revendication 25, caractérisée en ce que la prise d'air est réalisée sous la forme d'une fenêtre pivotante, d'une fenêtre à bascule ou d'un vasistas (122) disposé dans la coque intérieure (12).

27. Installation selon l'une quelconque des revendications 1 à 26, caractérisée en ce que l'espace intermédiaire de façade (14) présente une entrée d'air (18′) obturable à volonté dans la zone inférieure spécifique à l'étage, une sortie d'air (114) obturable à volonté dans la zone supérieure spécifique à l'étage et une prise d'air (122) allant à l'intérieur du bâtiment et obturable à volonté dans la zone de la coque intérieure (12).

28. Installation selon l'une quelconque des revendications 1 à 27, caractérisée en ce que l'espace intermédiaire de façade (14) est ouvert à chaque étage à la périphérie du bâtiment et est doté de préférence d'une installation de circulation d'air agissant dans le sens périphérique.

29. Installation selon l'une quelconque des revendications 1 à 28, caractérisée en ce que l'espace intermédiaire de façade (14) est subdivisé en étages et peut être alimenté séparément en air frais.

30. Installation selon l'une quelconque des revendications 1 à 29, caractérisée en ce que l'espace intermédiaire de façade est subdivisé en parcelles (112) à l'intérieur d'un étage dans le sens périphérique du bâtiment et peut être alimenté séparément avec de l'air frais.

31. Installation selon la revendication 29 ou 30, caractérisée en ce que les parties d'étage et/ou parcelles (112) de l'espace intermédiaire de façade (14) débouchent dans une cheminée d'évacuation d'air (116) commune.
